# EUROPÄISCHE PATENTSCHRIFT

(11) **EP 2 286 475 B1**
(45) Veröffentlichungstag und Bekanntmachung des Hinweises auf die Patenterteilung: **19.09.2012**
(21) Anmeldenummer: 09765522.9
(22) Anmeldetag: 28.05.2009
(51) Int. Cl.: H01M 2/10, H01M 2/12, H01M 2/36

(54) **AKKUMULATORGEHÄUSE MIT EINEM ENTGASUNGSSYSTEM UND AKKUMULATOR MIT EINEM AKKUMULATORGEHÄUSE**
ACCUMULATOR HOUSING HAVING A DEGASSING SYSTEM AND ACCUMULATOR HAVING AN ACCUMULATOR HOUSING
BOÎTIER D'ACCUMULATEUR AVEC SYSTÈME DE DÉGAZAGE ET ACCUMULATEUR AVEC BOÎTIER D'ACCUMULATEUR

(30) Priorität: 17.06.2008 DE 102008028430
(43) Veröffentlichungstag der Anmeldung: 23.02.2011
(73) Patentinhaber: Johnson Controls Hybrid and Recycling GmbH, 30419 Hannover (DE)
(72) Erfinder: WIEGMANN, Martin, 27246 Borstel (DE); JOSWIG, Ralf, 29269 Buchholz (DE)
(74) Vertreter: Günther, Constantin
(86) Internationale Anmeldenummer: PCT/EP2009/003823
(87) Internationale Veröffentlichungsnummer: WO 2009/152942

(56) Entgegenhaltungen:
- GB-A- 213 698
- GB-A- 399 061
- GB-A- 1 268 097
- US-A- 5 187 746

## Beschreibung

Die Erfindung betrifft ein Akkumulatorgehäuse mit einem Entgasungssystem und einen Akkumulator mit einem Akkumulatorgehäuse, insbesondere für Hybrid-Akkumulatoren, Nickelmetallhydrid-Akkumulatoren und Lithiumionen-Akkumulatoren.

Leistungsstarke Akkumulatoren mit hohen Energiedichten in den galvanischen Zellen werden insbesondere in Hybrid-Fahrzeugen und in Elektrofahrzeugen verwendet.

Die hohen Energiedichten führen zu einer hohen Wärmeentwicklung. Um die Leistungsfähigkeit der Akkumulatoren zu erhalten und in einem weiten Betriebsfenster gewährleisten zu können, ist eine effektive Kühlung der Akkumulatoren notwendig. Zudem ist es erforderlich, dass die Akkumulatoren ein Sicherheitssystem aufweisen, das bei einer Überhitzung der Akkumulatoren eingreift, um insbesondere eine Explosion der Zellen zu verhindern.

Neben einer effektiven Kühlung und einem Sicherheitssystem zum Schutz vor einer Überhitzung erfordern leistungsstarke Akkumulatoren ein Sicherheitssystem zum Schutz des Akkumulators vor einem Gasüberdruck in dem Akkumulator. Der Gasüberdruck kann zu plötzlichen Reaktionen und zu einem Entzünden des Akkumulators führen. Dadurch können Menschen und die Umwelt geschädigt werden.

Darüber hinaus ist das Innere der Akkumulatoren vor Staub und vor Spritzwasser zu schützen, das beispielsweise durch Hochdruckreiniger oder Dampfstrahfev hervorgerufen wird.

Aus der GB 399,061 A ist ein luft- und wasserdichter Behälter für elektrische Akkumulatoren bekannt, der insbesondere für den Einsatz auf Schiffen vorgesehen ist.

Aufgabe der vorliegenden Erfindung ist es daher, ein Akkumulatorgehäuse und einen Akkumulator bereitzustellen, die wirksam vor einem Gasüberdruck und vor äußeren Verunreinigungen geschützt sind.

Die Aufgabe wird erfindungsgemäß mit einem Akkumulatorgehäuse mit den Merkmalen von Anspruch 1 und einem Akkumulator mit den Merkmalen von Anspruch 11 gelöst.

Das erfindungsgemäße Entgasungssystem ermöglicht aufgrund des in der Führung beweglich angeordneten Schwimmkörpers einen schnellen Druckausgleich zwischen dem Akkumulatorinneren und der Akkumulatorumgebung, wenn beispielsweise eine Zelle in Folge einer Überladung, eines Kurzschlusses oder ähnlicher Ursachen eine große Menge Gas freisetzt. Der Druckanstieg wird über die Öffnungen in dem erfindungsgemäßen Entgasungssystem zuverlässig abgebaut.

Darüber hinaus kann Kondenswasser, das sich auf dem Boden des Akkumulators sammelt, ebenfalls über diese Öffnungen entweichen.

Ferner wird von außen kommendes Spritzwasser, verursacht z.B. durch Hochdruckreiniger oder Dampfstrahler, sowie weitere Verunreinigungen über das Schwimmkörpersystem abgehalten, so dass es nicht in das Akkumulatorinnere gelangt. Damit ist das erfindungsgemäße Entgasungssystem geeignet, die Watfähigkeit von Fahrzeugen zu erhöhen. Unter Watfähigkeit wird die Fähigkeit nicht schwimmfähiger Fahrzeuge verstanden, ohne besondere Vorbereitung Wasser und Schlammhindernisse zu überwinden. Beispielsweise lässt sich das erfindungsgemäße Entgasungssystem vorteilhaft in SUVs (Sport Utility Vehicle) einsetzten.

Steigt ein Flüssigkeitsstand von außen an, wird der Schwimmkörper in die oberhalb des Schwimmkörpers angeordnete Öffnung hineingedrückt und dichtet die Öffnung ab. So wird das Akkumulatorinnere wirksam vor eindringender Flüssigkeit geschützt.

Eine einfache und kostengünstige Herstellung wird erzielt, wenn in dem Grundkörper ein Käfig angeordnet ist, der die Führung aufnimmt. Der Käfig und der Grundkörper können aus unterschiedlichen Materialien gefertigt sein, beispielsweise der Käfig aus kostengünstigem Kunststoff und der Grundkörper aus Metall.

Eine einfache Montage wird dadurch erreicht, dass der Käfig ein Oberteil und ein Unterteil aufweist, wobei das Oberteil eine Öffnung hat und das Unterteil zumindest teilweise flüssigkeitsdurchlässig ist. Der mehrteilige Aufbau des Käfigs macht auch einen Teilaustausch möglich, beispielsweise bei Reparatur- und Wartungsarbeiten.

Eine wirksame Abdichtung für Verunreinigungen, insbesondere von Spritzwasser, lässt sich erzielen, wenn die Öffnung des Oberteils mit einer Dichtung versehen ist.

In einer Ausführungsform ist die Öffnung des Oberteils kreisförmig (in Draufsicht, d.h. aus Richtung des Akkumulatorinneren). Zweckmäßig ist der Schwimmkörper in diesem Fall eine Kugel. Eine kreisförmige Öffnung und eine Kugel als Schwimmkörper haben aufgrund ihrer Rotationssymmetrie gute Dichteigenschaften, die unabhängig von der relativen Ausrichtung um eine Symmetrieachse von der Öffnung und des Schwimmkörpers ist. Die Abdichtung lässt sich weiter verbessern, wenn die Öffnung in der Form eines Kegelstumpfes ausgebildet wird, dessen größere Grundfläche zur Kugel gerichtet ist. In diesem Fall wird die Kugel an der Mantelfläche entlang in die Öffnung hineingeführt, wenn außerhalb des Akkumulators ein Flüssigkeitsstand steigt und die Kugel nach oben drückt.

Die Kugel lässt sich gut führen, wenn die Führung eine Mehrzahl von Führungsstegen umfasst, die im Wesentlichen in einer Mantelfläche eines gedachten Zylinders angeordnet sind, wo beide Zylinder einen Innendurchmesser aufweisen, der etwa dem Durchmesser der Kugel entspricht. Vorzugsweise werden der Innendurchmesser des gedachten Zylinders und der Durchmesser der Kugel derart aufeinander abgestimmt, dass die Kugel von den Führungsstegen in ihrer Führung nicht behindert und gleichzeitig eine gute Führung erreicht wird.

Von außen eindringender Staub wird wirksam durch ein Siebgewebe abgehalten, das an dem Unterteil des Käfigs angeordnet ist. Das Siebgewebe lässt es weiter zu, dass Flüssigkeiten, z.B. Kondenswasser, aus dem Inneren des Akkumulators nach außen dringen kann.

In einer Ausführungsform weist das Entgasungssystem in Draufsicht einen kreisförmigen Querschnitt auf. In diesem Fall ist der Grundkörper zweckmäßig in Form eines Hohlzylinders ausgebildet.

Zweckmäßig ist unterhalb des Grundkörpers ein Prallblech angeordnet, das beispielsweise einen direkten Strahl eines Hochdruckreinigers oder Dampfstrahlers auf das Schwimmkörpersystem vermindert.

Die Erfindung wird anhand eines in den nachfolgenden Figuren dargestellten Ausführungsbeispiels näher erläutert. Es zeigen:
- Figur 1 -: eine Seitenansicht eines erfindungsgemäßen Entgasungssystems,
- Figur 2 -: eine Schnittansicht in Richtung A aus Figur 1,
- Figur 3 -: eine weitere Seitenansicht des Entgasungssystems aus Figur 1,
- Figur 4. -: eine Schnittansicht in Richtung B aus Figur 3,
- Figur 5 -: eine weitere Seitenansicht des erfindungsgemäßen Entgasungssystems aus Figur 1,
- Figur 6 -: eine Schnittansicht in Richtung C aus Figur 5,
- Figur 7 -: eine Schnittansicht in Richtung D aus Figur 5,
- Figur 8 -: eine perspektivische Ansicht von unten auf das erfindungsgemäße Entgasungssystems aus den vorstehenden Figuren,
- Figur 9 -: eine Schnittansicht einer weiteren Ausführungsform des erfindungsgemäßen Entgasungssystems im geöffneten Zustand,
- Figur 10 -: eine Schnittansicht einer weiteren Ausführungsform des erfindungsgemäßen Entgasungssystems im geschlossenen Zustand und
- Figur 11 -: zwei Ansichten des Schwimmkörpers aus der Ausführungsform nach den Figuren 9 und 10.

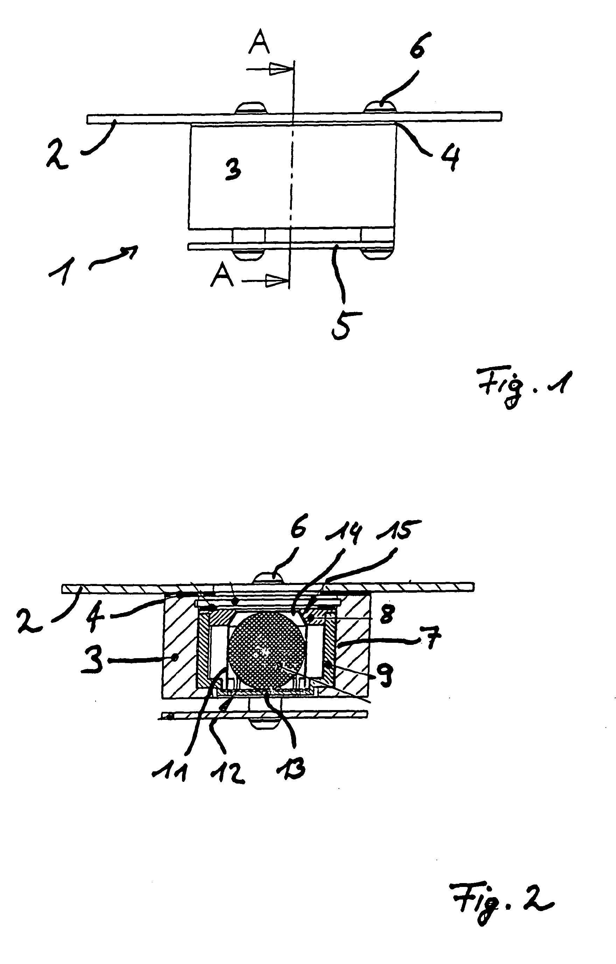

Figur 1 zeigt ein erfindungsgemäßes Entgasungssystem 1.

Das Entgasungssystem 1 ist an einem Gehäuseboden 2 eines Akkumulators befestigt.

Das Entgasungssystem 1 weist einen Grundkörper 3 auf. Zwischen dem Gehäuseboden 2 und dem Grundkörper 3 ist eine Dichtung 4 angeordnet.

Der Grundkörper 3 ist aus einem Material gefertigt, das dem Entgasungssystem 1 eine ausreichende Stabilität gibt, beispielsweise aus Metall.

Unterhalb des Grundkörpers 3 ist in einem Abstand ein Prallblech 5 angeordnet. Das Prallblech 5 dient als zusätzlicher Schutz vor direkten äußeren Verunreinigungen, wie beispielsweise Spritzwasser.

Das Prallblech 5 und die Dichtung 4 sind zusammen mit Schrauben 6 an dem Gehäuseboden 2 lösbar verbunden. Alternativ ist auch eine nicht lösbare Klebe- oder Schweißverbindung denkbar. Nicht lösbar heißt in diesem Zusammenhang, dass die Komponenten nicht ohne Beschädigungen voneinander getrennt werden können. Die Schrauben sind durch Bohrungen hindurchgeführt, die in dem Grundkörper 3 ausgebildet sind.

Im Inneren des Grundkörpers 3 befindet sich ein Käfig 7. Der Käfig weist ein Oberteil 8 und ein Unterteil 9 auf. Oberteil 8 und Unterteil 9 sind separate Bauteile, um gegebenenfalls Reparaturen oder Wartungsarbeiten an dem Entgasungssystem 1 leichter vornehmen zu können. Denkbar ist jedoch auch, dass das Oberteil 8 und das Unterteil 9 einstückig ausgebildet sind.

In dem Käfig 7 befindet sich ein Schwimmkörper in Form einer Kugel 10. Die Kugel 10 ist aus einem Material, das auf Wasser schwimmt, um die Funktion eines Schwimmkörpers erfüllen zu können, beispielsweise aus geeignetem Kunststoff oder Gummi.

Die Kugel 10 wird von einer Mehrzahl von Führungsstegen 11 geführt. Hierzu sind die Führungsstege 11 im Wesentlichen senkrecht entlang eines gedachten Zylindermantels angeordnet. Die Führungsstege 11 sind Kunststoffspritzteile.

Auf der Innenseite des Käfigs 7 ist auf dem Unterteil 9 ein Siebgeflecht 12 angeordnet. Das Siebgeflecht 12 hat im Wesentlichen die Aufgabe, Verunreinigungen von außen (z.B. Staub) abzuhalten. Darüber hinaus soll auch gewährleistet sein, dass Flüssigkeit vom Inneren des Käfigs 7 durch das Siebgeflecht 12 hindurch nach außen gelangen kann. Hierzu sind ferner in dem Unterteil 9 Öffnungen 13 vorgesehen.

Das Oberteil 8 weist eine Öffnung 14 auf. Die Öffnung 14 hat die Form eines Kegelstumpfes. Entlang der Mantelfläche ist eine Dichtung 15 angebracht.

In Figur 2 ist kein äußerer Wasserstand vorhanden, so dass die Kugel 10 auf dem Siebgeflecht 12 aufliegt und die Öffnung 14 zumindest teilweise freigegeben ist. So können Flüssigkeiten und Gase aus dem Inneren des Akkumulators nach außen dringen.

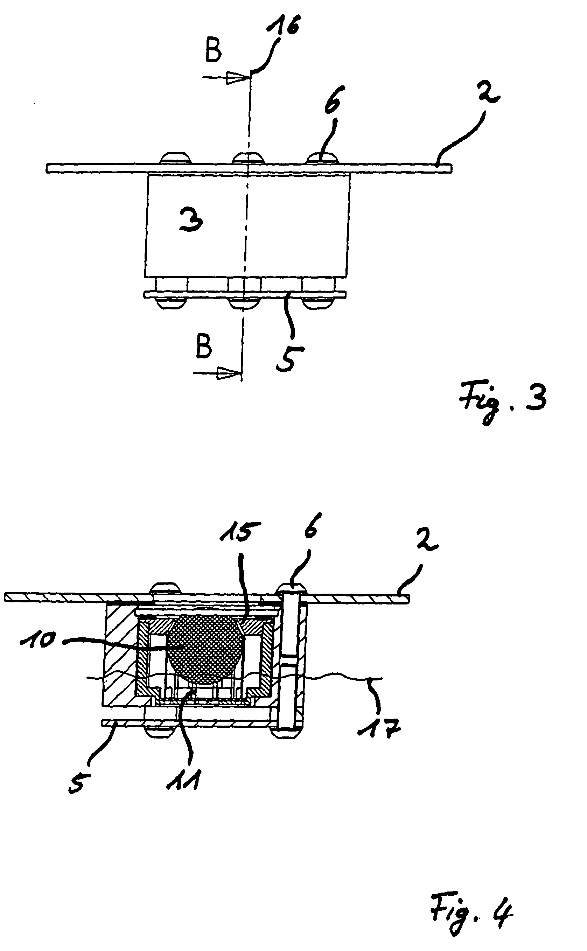

Figur 3 zeigt eine weitere Ansicht des Entgasungssystems 1, dieses Mal aus einer um eine senkrechte Linie 16 gedrehten Ansicht.

Figur 4 stellt eine Schnittansicht in Richtung B aus Figur 3 dar.

Dargestellt ist das Innere des Käfigs 7, wenn ein äußerer Wasserstand 17 vorhanden ist.

Es ist zu erkennen, dass die Kugel 10 von dem Wasserstand 17 nach oben in die kegelstumpfförmige Öffnung 14 gedrückt ist.

Die Kugel 10 dichtet die Öffnung 14 zusammen mit der Dichtung 15 in der Öffnung 14 ab.

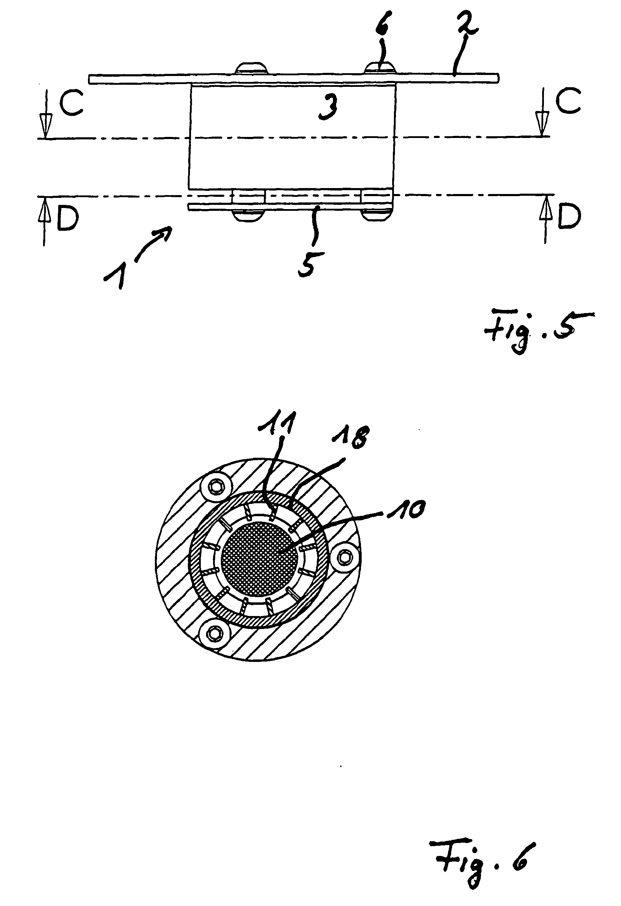

Figur 5 zeigt eine weitere Seitenansicht des Entgasungssystems 1.

Figur 6 ist eine Schnittansicht in Richtung C aus Figur 5.

Es ist zu erkennen, dass die Führungsstege 11 rechteckige Querschnittsflächen haben und im Wesentlichen radial angeordnet sind. Die Führungsstege 11 sind im Wesentlichen in gleichen Winkelabständen entlang eines Kreises 18 angeordnet.

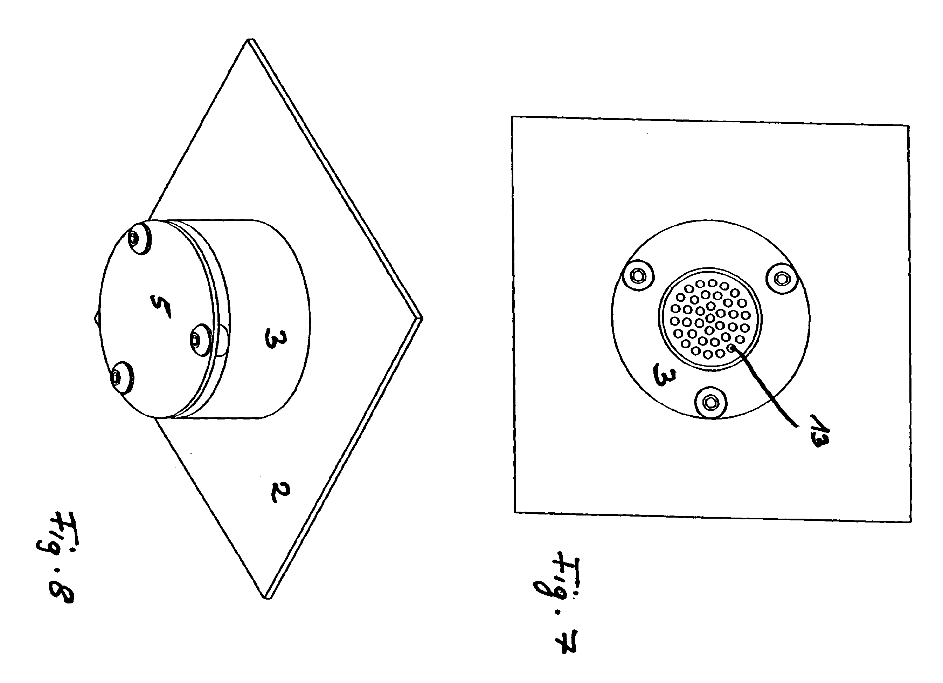

Figur 7 zeigt eine Schnittansicht in Richtung D aus Figur 5.

In dieser Figur sind die Öffnungen 13 zu erkennen, die einen siebartigen Durchlass für Flüssigkeiten und Gase bilden.

Figur 8 ist eine perspektivische Ansicht auf das Entgasungssystem 1 von unten, d.h. von außen (in Bezug auf ein Gehäuse mit dem Gehäuseboden 2).

Zu erkennen ist, dass das Prallblech 5 eine kreisförmige Querschnittsfläche aufweist, die im Wesentlichen den gleichen Durchmesser hat wie der Grundkörper 3.

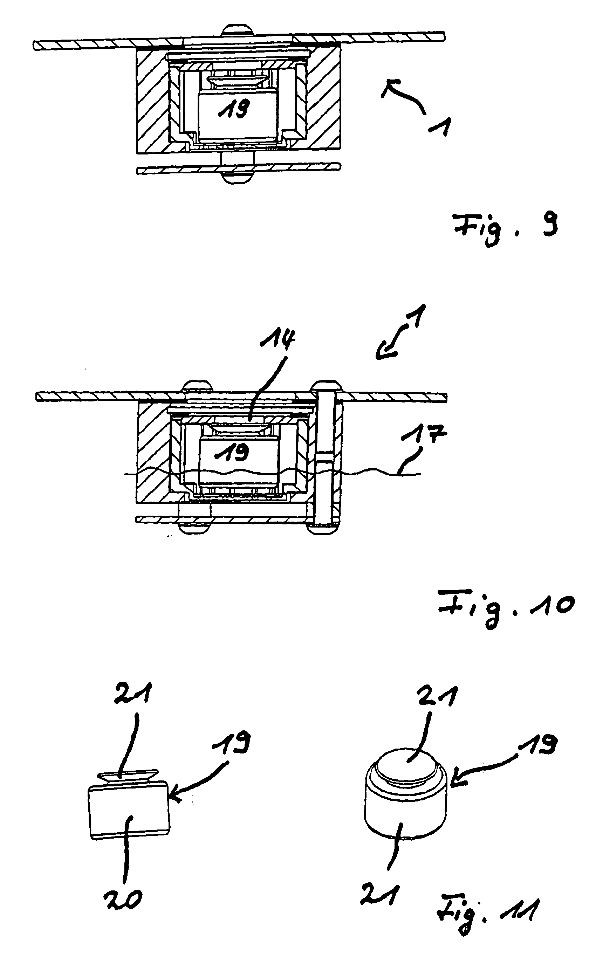

In den Figuren 9, 10 und 11 ist eine weitere Ausführungsform des erfindungsgemäßen Entgasungssystems 1 mit einem im Wesentlichen zylindrischen Schwimmkörper 19.

In Figur 9 ist das Entgasungssystem 1 im geöffneten Zustand gezeigt. Der Schwimmkörper 19 liegt auf einem Siebgeflecht 12 in dem Käfig auf, da sich keine Flüssigkeit im Käfig 7 befindet.

In Figur 10 ist das Entgasungssystem 1 im geschlossenen Zustand gezeigt. Der Schwimmkörper 19 schwimmt auf der durch den Wasserstand 17 angedeuteten Flüssigkeit. Der Schwimmkörper wird durch die Flüssigkeit gegen das Oberteil 8 des Käfigs 7 gedrückt und verschließt so die Öffnung 14.

In Figur 11 sind zwei Ansichten des Schwimmkörpers 19 gezeigt. Der Schwimmkörper 19 besteht im Wesentlichen aus einem zylindrischen ersten Körper 20 und einem zweiten Körper 21 in Form eines Kegelstumpfes. Der zweite Körper 21 ist umgekehrt (das heißt mit der kleineren Grundfläche) auf den ersten Körper 20 gesetzt. Der zweite Körper 21 ist aus einem weichen Material, beispielsweise aus einem Gummi oder Silikon, und dient als Sauger, der die Dichtfunktion übernimmt.

## Patentansprüche

1. Akkumulatorgehäuse mit einem an einem Gehäuseboden (2) angeordneten Entgasungssystem (1) für Akkumulatoren für Hybridfahrzeuge mit den Merkmalen:
a) das Entgasungssystem (1) weist einen Grundkörper (3) zum Anbringen an einen Gehäuseboden (2) des Akkumulators auf,
b) der Grundkörper (3) weist in einem oberen Abschnitt eine Öffnung auf, c) der Grundkörper (3) ist in einem unteren Abschnitt zumindest teilweise flüssigkeitsdurchlässig,
d) in dem Grundkörper (3) ist eine Führung angeordnet, und
e) in dem Grundkörper (3) ist ein Schwimmkörper vorgesehen ist, der von der Führung geführt wird,
**gekennzeichnet durch** ein Prallblech (5), das unterhalb des Grundkörpers (3) angeordnet ist.

2. Akkumulatorgehäuse nach Anspruch 1 , **gekennzeichnet durch** einen Käfig (7), der in dem Grundkörper (3) angeordnet ist und die Führung aufnimmt.

3. Akkumulatorgehäuse nach Anspruch 2, **dadurch gekennzeichnet, dass** der Käfig (7) ein Oberteil (8) und ein Unterteil (9) aufweist, wobei das Oberteil (9) eine Öffnung (14) hat und das Unterteil (9) zumindest teilweise flüssigkeitsdurchlässig ist.

4. Akkumulatorgehäuse nach Anspruch 3, **gekennzeichnet durch** eine Dichtung (15) entlang der Öffnung (14) des Oberteils (8).

5. Akkumulatorgehäuse nach Anspruch 3 oder 4, **dadurch gekennzeichnet, dass** die Öffnung (14) des Oberteils (8) kreisförmig ist.

6. Akkumulatorgehäuse nach einem der vorstehenden Ansprüche, **dadurch gekennzeichnet, dass** der Schwimmkörper eine Kugel (10) ist.

7. Akkumulatorgehäuse nach Anspruch 6, **dadurch gekennzeichnet, dass** die Führung eine Mehrzahl von Führungsstegen (11) umfasst, die im Wesentlichen in einer Mantelfläche eines Zylinders angeordnet sind, wobei der Zylindereinen Innendurchmesser aufweist, der etwa dem Durchmesser der Kugel (10) entspricht.

8. Akkumulatorgehäuse nach einem der vorstehenden Ansprüche, **gekennzeichnet durch** ein Siebgewebe (12), das an dem Unterteil (9) des Käfigs (7) angeordnet ist.

9. Akkumulatorgehäuse nach einem der vorstehenden Ansprüche, **dadurch gekennzeichnet, dass** das Entgasungssystem (1) in Draufsicht einen kreisförmigen Querschnitt aufweist.

10. Akkumulatorgehäuse nach einem der vorstehenden Ansprüche, **dadurch gekennzeichnet, dass** das Entgasungssystem (1) lösbar an dem Gehäuseboden (2) angebracht ist.

11. Akkumulator für Hybridfahrzeuge mit einem Akkumulatorgehäuse nach einem der vorstehenden Ansprüche.

## Claims

1. Accumulator housing having a degassing system (1), arranged on a housing floor (2), for accumulators for hybrid vehicles having the features:
a) the degassing system (1) has a base body (3) for attachment to a housing floor (2) of the accumulator,
b) the base body (3) has an opening in an upper section,
c) the base body (3) is at least partially permeable to a liquid in a lower section,
d) a guide is arranged in the base body (3), and
e) a float, which is guided by the guide, is provided in the base body (3),
**characterized by** an impact baffle (5) which is arranged underneath the base body (3).

2. Accumulator housing according to Claim 1, **characterized by** a cage (7) which is arranged in the base body (3) and accommodates the guide.

3. Accumulator housing according to Claim 2, **characterized in that** the cage (7) has an upper part (8) and a lower part (9), wherein the upper part (9) has an opening (14), and the lower part (9) is at least partially permeable to a liquid.

4. Accumulator housing according to Claim 3, **characterized by** a seal (15) along the opening (14) of the upper part (8).

5. Accumulator housing according to Claims 3 or 4, **characterized in that** the opening (14) of the upper part (8) is circular.

6. Accumulator housing according to one of the preceding claims, **characterized in that** the float is a sphere (10).

7. Accumulator housing according to Claim 6, **characterized in that** the guide comprises a plurality of guide webs (11) which are arranged essentially in a lateral surface of a cylinder, wherein the cylinder has an internal diameter which corresponds approximately to the diameter of the sphere (10).

8. Accumulator housing according to one of the preceding claims, **characterized by** a filter screen (12) which is arranged on the lower part (9) of the cage (7).

9. Accumulator housing according to one of the preceding claims, **characterized in that** the degassing system (1) has a circular cross section in plan view.

10. Accumulator housing according to one of the preceding claims, **characterized in that** the degassing system (1) is releasably attached to the housing floor (2).

11. Accumulator for hybrid vehicles, having an accumulator housing according to one of the preceding claims.

## Revendications

1. Boîtier d'accumulateur avec un système de dégazage (1) disposé sur un fond de boîtier (2) pour des accumulateurs destinés à des véhicules hybrides, présentant les caractéristiques suivantes :
a) le système de dégazage (1) présente un corps de base (3) pour la pose sur un fond de boîtier (2) de l'accumulateur,
b) le corps de base (3) présente une ouverture dans une section supérieure,
c) le corps de base (3) est au moins partiellement perméable au liquide dans une section inférieure,
d) un guide est disposé dans le corps de base (3), et
e) il est prévu dans le corps de base (3) un corps flottant, qui est guidé par le guide,
**caractérisé par** une tôle de chicane (5), qui est disposée sous le corps de base (3).

2. Boîtier d'accumulateur selon la revendication 1, **caractérisé par** une cage (7), qui est disposée dans le corps de base (3) et qui contient le guide.

3. Boîtier d'accumulateur selon la revendication 2, **caractérisé en ce que** la cage (7) comprend une partie supérieure (8) et une partie inférieure (9), dans lequel la partie supérieure (8) comporte une ouverture (14) et la partie intérieure (9) est au moins partiellement perméable au liquide.

4. Boîtier d'accumulateur selon la revendication 3, **caractérisé par** un joint d'étanchéité (15) le long de l'ouverture (14) de la partie supérieure (8).

5. Boîtier d'accumulateur selon la revendication 3 ou 4, **caractérisé en ce que** l'ouverture (14) de la partie supérieure (B) est de forme circulaire.

6. Boîtier d'accumulateur selon l'une quelconque des revendications précédentes, **caractérisé en ce que** le corps flottant est une sphère (10).

7. Boîtier d'accumulateur selon la revendication 6, **caractérisé en ce que** le guide comprend une pluralité de nervures de guidage (11), qui sont disposées essentiellement dans une surface latérale d'un cylindre, dans lequel le cylindre présente un diamètre intérieur qui correspond sensiblement au diamètre de la sphère (10).

8. Boîtier d'accumulateur selon l'une quelconque des revendications précédentes, **caractérisé par** une gaze métallique (12), qui est disposée sur la partie inférieure (9) de la cage (7).

9. Boîtier d'accumulateur selon l'une quelconque des revendications précédentes, **caractérisé en ce que** le système de dégazage (1) présente, dans une vue en plan, une section transversale de forme circulaire.

10. Boîtier d'accumulateur selon l'une quelconque des revendications précédentes, **caractérisé en ce que** le système de dégazage (1) est monté de façon séparable sur le fond de boîtier (2).

11. Accumulateur destiné à des véhicules hybrides avec un boîtier d'accumulateur selon l'une quelconque des revendications précédentes.
